Europäisches Patentamt

European Patent Office

Office européen des brevets

(19)

(11) Publication number:

**0 276 786**
**A2**

(12) # EUROPEAN PATENT APPLICATION

(21) Application number: 88100992.2

(51) Int. Cl.⁴: **H04N 9/22**

(22) Date of filing: **23.01.88**

(30) Priority: **30.01.87 IT 1921787**

(43) Date of publication of application:
**03.08.88 Bulletin 88/31**

(84) Designated Contracting States:
**DE ES FR GB**

(71) Applicant: **LAB SAL di Pranzo Salvatore**
**Strada Piaola 22 Zona Industriale Prado**
**I-27010 Cura Carpignano (Pavia)(IT)**

(72) Inventor: **Pranzo, Salvatore**
**Corso Cairoli 36**
**I-27100 Pavia(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Polychromatic monitor for connection to electric apparata, in particular of numeric type.**

(57) A polychromatic monitor for connection to electric apparata, in particular of the numeric type, for the visualization of color images and/or texts supplied at the input in form of electric signals, is described. The monitor according to the invention comprises a cathode-ray tube for generating a single electron beam at different energy levels and a screen having at least one layer of electroluminescent material to be excited in a differentiated manner by the electron beam for the emission of polychromatic light comprising at least two base colors. According to the invention a circuit is provided for controlling the cathode-ray tube receiving in input the electric signals and controlling the cathode-ray tube so as to cause the generation of the electron beam sequentially at the different energy levels related to the various base colors and the emission in sequence of said base colors.

FIG. 1

# POLYCHROMATIC MONITOR FOR CONNECTION TO ELECTRIC APPARATA IN PARTICULAR OF NUMERIC TYPE

The present invention relates to a polychromatic monitor for connection to electric apparata, in particular of numeric type, for the visualization of color images and/or texts supplied at the input in form of electric signals comprising the various video signals and the vertical and horizontal synchronization signals.

As is known, visualization of information on a monitor is currently carried out in a monochromatic manner using a single appropriately controlled electron gun or polychromatically using three different electron guns, each whereof is supplied with a different video signal for the obtainment of the desired colors.

It is furthermore known that a monochromatic monitor, by virtue of the presence of a single electron gun, has several advantages from the point of view of technology and therefore of manufacturing costs; it furthermore allows a good definition of the images. This causes it to be in widespread use, so that tubes with different dimensions have also been produced, and therefore are easily available on the market. As opposed to these advantages, however, the monochromatic monitor allows little possibility of highlighting due to the need to use the different tones of gray to define images (for example in histograms) of different types.

On the contrary color monitors provide a good highlighting capability by virtue of the use of colors, but they disadvantageously have a significantly more complicated technology with much higher costs due to the use of a tube with three guns and to the need for a perforated mask before the photemitting screen. Furthermore the current available polychromatic monitors have poor definition, due to the perforated mask, as well as lower availability on the market of sizes and shapes, and therefore the need to use, not always optimum,compromise solutions.

Furthermore, in the military field polychromatic monitors are known using a single electron gun having a screen coated with at least one electroluminescent material layer capable of emitting light at different wavelengths (different colors) depending on the excitation energy generated by the electron gun. However such monitors are currently absolutely unusable for industrial uses since they do not allow visualization by point scanning of the screen but have visualization modes similar to hand-drawing, with deflection of the electron beam following the lines to be traced.

Given this situation, the aim of the present invention is to provide a polychromatic monitor which eliminates the disadvantages according to the prior art, and in particular allows the visualization of color images with reduced cost with respect to the polychromatic monitors currently in use both in the civil field and in the military field.

Within this aim, a particular object of the present invention is to provide a said polychromatic monitor using a single electron gun, without the need for a perforated mask, thereby drastically reducing the costs of the monitor itself, though allowing the visualization of color images, and thus achieving the highlighting allowed by this technique.

Still another object of the present invention is to provide a polychromatic monitor which can be controlled with the signals common in civil industry, and that is to say using synchronization and video signals similar to those currently provided by available electronic apparata, without the need for variations in the operating mode of the apparata in which the texts to be visualized are generated or without the need for specific interfaces.

Still another object of the present invention is to provide a said polychromatic monitor capable of providing a definition comparable to that currently obtained with monochromatic monitors.

Not least object of the present invention is to provide a said polychromatic monitor employing single-gun cathode-ray tubes of a type available on the market with great choice as to dimensions and shapes.

The aim and the objects mentioned, as well as others which will become apparent hereinafter, are achieved by a polychromatic monitor for connection to electric apparata, in particular of the numeric type, according to the invention, for visualizing color images and/or texts supplied in input in form of electric signals, comprising a cathode-ray tube for generating a single electron beam at different energy levels and a screen having at least one layer of electroluminescent material to be excited in a differentiated manner by said electron beam for emitting polychromatic light comprising at least two base colors, characterized in that it furthermore comprises a control circuit for said cathode-ray tube receiving in input said electric signals and controlling said cathode-ray tube so as to cause generation of said electron beam sequentially at said different energy levels and emission in sequence of said base colors.

Further characteristics and advantages of the invention will become apparent from the description of a preferred but not exclusive embodiment, illustrated only by way of non-limitative example in the accompanying drawings, wherein:

figure 1 is a block diagram of the cathode-ray tube control circuit;

figure 2 is a schematic view of a cathode-ray tube;

figure 3 is a detailed circuit diagram of a possible embodiment of the block diagram of figure 1; and

figures 4a to 4h illustrate the plot of signals sampled in suitable points of the diagram of figure 3.

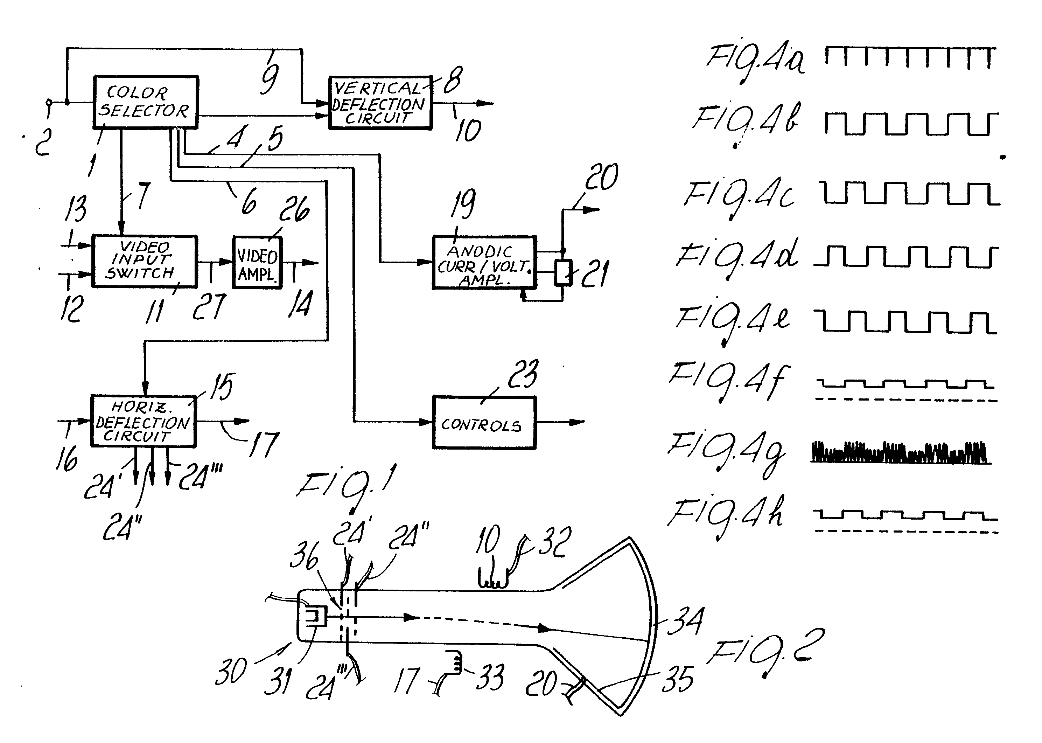

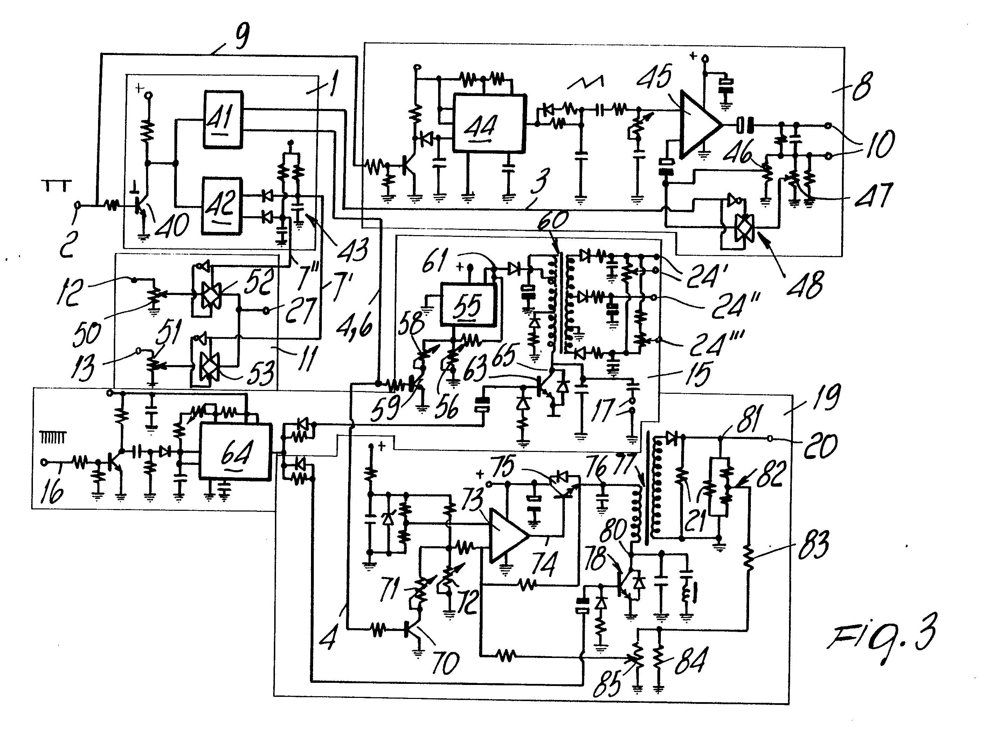

Reference should be initially made to figure 1, illustrating the block diagram of the control circuit according to the invention, in the exemplifying case in which it is desired to visualize images constituted by two base colors and by a third color resulting from the combination of the first two. In detail, the circuit comprises a color selection section, indicated at 1, receiving at the input the vertical synchronization signal supplied on the terminal 2. The color selection section (substantially comprising a counter and possibly a decoder-demultiplexer) supplies at the output on the lines 3-6 suitably coded color signals, the coding whereof indicates the color which is visualized at that instant. In particular in the illustrated embodiment, upon the reception of a synchronization impulse, indicating the beginning of the page, it supplies at the output a signal which identifies a base color, which is changed at the end of the page in order to allow the sequential visualization of all the base colors, which will therefore be shown at different times, in sequence, on the screen and will be perceived as transmitted simultaneously by the human eye due to the phenomenon of image retention by the retina and to the persistence of the luminous emission of the electroluminescent material. The color selection circuit then controls the other blocks of the circuit so as to adapt the performance of the circuit itself to the base color being visualized moment by moment.

In detail, the color signal supplied on the line 3 is sent to a vertical deflection circuit 8, also receiving at the input the synchronization signal 9 and having the purpose of generating at the output the deflection signal required to drive the vertical deflection yoke for the deflection in this direction of the electron beam and the return to the beginning of the page. The color signal supplied on the line 4 is furthermore sent to an anodic current/voltage amplifier 19 having the function of generating the energy required for the excitation of the electroluminescent material deposited on the screen of the cathode-ray tube, to therefore obtain the differentiated emission in the color desired at that instant. Said signal with differentiated energy is indicated in the figure at 20, while 21 represents the discharge circuit, explained in greater detail hereinafter, for the reduction of the anodic voltage at convenient instants. The line 5 is connected to the control circuit 23 for optional controls (for example separate color by color focusing, separate color by color brightness, etc.). The line 6 is instead connected to the horizontal deflection circuit 15 receiving on the input 16 the horizontal (row) synchronization signal and adapted to generate the control signal for the horizontal deflection coil to achieve the row scan of the electron beam (line 17), and the focus, video supply and brightness signals (lines 24' -24"). Finally the line 7 allows sending of the color signal, or of a signal correlated thereto (as will become apparent in detail hereinafter), to the video input switch 11, receiving on the inputs 12 and 13 the video signals related to the different base colors (two here) and supplying on the output 27 to the final amplifier 26 only the video signal related to the base color specified by the signal on the line 7.

The connection of the control circuit of figure 1 to the cathode-ray tube is deduced from figure 2, in which the cathode-ray tube is generally indicated at 30. In particular, and schematically, the cathode for the emission of the electron beam, connected to the line 14, is indicated at 31, the vertical deflection yoke connected to the line 10 is indicated at 32, the horizontal deflection coil connected to the line 17 is indicated at 33, the screen including at least one photoemitting material layer (for example P51 phosphorus), adapted to emit light at different frequencies according to the excitation energy, is indicated at 34, the anode of the cathode-ray tube, connected to the line 20, is indicated at 36, and focusing electrodes connected to the lines 24' -24" and 24"' are indicated at 35.

The circuit of figure 1 operates as follows. The vertical synchronization signal, sent to the color selection circuit 1, causes the same to supply at the output a signal associated with a base color and varying at every synchronization impulse so as to identify in sequence all the base colors provided. This signal thus allows the adaptation of the anodic current or voltage generated by the amplifier 19 correspondingly to the energy required to obtain the emission of the light in the base color identified by the signal supplied by the color selector. Simultaneously the color signal supplied to the switch 11 allows access to the final video amplifier 26 only of the video signal corresponding to the base color identified by the selector 1. Finally the color signal supplied to the vertical deflection circuit 8 and to the horizontal deflection circuit 15 selects the amplification and possibly the waveform which must be generated by said amplifier circuits according to the characteristics which these must have depending on the different energies required for the deflection of the beam.

Reference should now be made to figure 3, illustrating a circuit diagram related to the block diagram of figure 1, in the case of base signals corresponding to only two colors. In this figure, for the sake of clarity, the blocks of figure 1 have been drawn again, and therefore have been assigned the same reference numerals.

In detail, in the particular case, the color selector 1 has been constructed here by means of a pair of flip-flops 41, 42 of the T type controlled at the input by a transistor 40 the base whereof is connected to the terminal 2 receiving the vertical synchronization signal. Accordingly, at every synchronization impulse, the flip-flops 41, 42 switch, generating at the output rectangular waveforms corresponding to a digital signal the high level whereof identifies a first color (for example red) and the low level whereof identifies a second base color (for example green) with respect to line 3 (see figure 4b) and vice versa as to line 4-6 (see figure 4c). The same applies to the outputs of the flip-flop 42, which however generates a signal the active edge whereof is delayed with respect to the corresponding one sent on the lines 3 and 4-6, due to the presence of a delay section, generally identified here at 43 and comprising resistors, diodes and capacitors, obtaining therefore on the line 7' the signal illustrated in figure 4d and on the line 7" the signal illustrated in figure 4e.

8 identifies here, too, the vertical deflection circuit receiving on the line 9 the synchronization signal and generating the signal required for the control of the vertical yoke. This circuit, substantially of a known type, comprises a timer 44 (constituted for example by a 555 integrated circuit) for generating at the output a saw-tooth signal which is sent to a suitable operational amplifier 45 (for example constituted by the TDA 2300 component manufactured by SGS) for the obtainment of the desired signal. The amplifier 45 has a system for varying the gain according to the base color transmitted at that instant, taken from the feed-back branch connecting the output 10 to an input of said amplifier 45. As can be seen, the feed-back branch has a first line comprising a potentiometer 46 (having the function of allowing the adjustment according to the cathode-ray tube actually used) and such as to provide a base amplification level corresponding to one of the transmitted colors (for example green) and a second line, in parallel with the first, comprising a second potentiometer 47 and switch means 48 controlled by the signal supplied on the line 3. In practice, depending on the color being generated, the switch 48 (for example constituted by a quarter of the integrated circuit identified by 4016) causes (in the time intervals in which the video signal related to the red color is transmitted) the conduction of the switch 48 and therefore the parallel connection of the potentiometer 47 to the potentiometer 46, thus varying the gain level of the operational amplifier 45 and, finally, the level of the signal supplied at the output 10. Vice versa, when the signal on the line 3 causes the switching off of the switch 48, the amplifier 45 is fed back only by the potentiometer 46, obtaining the intended base gain level.

The switch of the video input 11 comprises in turn a pair of switch means 52 and 53, identical to the switch 48, and each connected to a video input 12 and 13 by means of a respective potentiometer 50 or 51. Accordingly, the signal supplied on the lines 7' and 7" (figures 4d and 4e), substantially in phase opposition, cause the first or the second base color to be alternately supplied towards the output 27, with a slight delay, for the reasons which will be explained in greater detail hereinafter.

The block indicated at 15 generates the signals required for horizontal deflection for the control signals (lines 24'-24").

As can be seen, said section comprises a power supply circuit 55 (for example the integrated circuit identified by L200 and manufactured by SGS) connected at an input to a pair of potentiometers 56 and 58, the latter being connected in turn to the collector of a transistor 59 receiving at the base the color signal supplied on the line 4-6. Also in this case, the potentiometer 56 supplies the base adjustment related to one of the colors (for example red), while the other potentiometer 58, connected to the power supply 55 only during the conduction times of the transistor 59, in turn switched on or off by the color signal present on the line 4-6, allows to obtain a different adjustment related to the other base color (for example green). In this manner, according to the state of the color signal, the output 61 of the timer will show a signal (shown in figure 4f) having a value variable according to the color being generated at that instant. Said signal is supplied to the primary of a transformer 60 the secondary whereof has a plurality of taps for the obtainment of the output 24' related to the focus, of the output 24" related to the power supply of the final video amplifier and of the output 24''' related to brightness. The signal used for the horizontal deflection circuit is then taken from the terminal 65 of the transformer 60. The terminal 65 is in fact connected to a Darlington transistor (for example the one identified by BU806 manufactured by SGS) connected at its base with the output of a timer circuit 64 (constituted for example by a 555) receiving at the input the horizontal synchronization signal. Accordingly the signal illustrated in figure 4g is obtained on the terminal 65 and, by means of suitable capacitors, is supplied to the output 17 for the control of the horizontal deflection plates.

The timer circuit 64 is furthermore connected to the anodic current voltage amplification section 19 to which the color signal supplied on the line 4-6 is also supplied. In detail, this color signal is supplied to a transistor 70 operating as a switch and connected with its collector to a potentiometer 71 connected to an input of an operational amplifier 73 (for example the 741). The same input of the operational amplifier 73 is connected to another potentiometer 72 supplying the base adjustment related to one of the colors (for example red) which is superimposed on the effect of the potentiometer 71 (related to green) during the conduction time intervals of the transistor 70, controlled by the color signal, in a manner similar to what was previously described for the potentiometers 46, 47 and 56, 58. The output of the amplifier 74 is then supplied to a Darlington transistor 75 at the emitter whereof, at the point 76, a signal is obtained approximately equal to that existing on the output 61 of the power supply 55 and shown in figure 4f (not in scale with the preceding ones). This signal is sent to a terminal of the primary of a transformer 77 the secondary whereof (supplying the anodic voltage required to obtain the convenient excitation level of the electron beam) is connected to the output 20 and to the discharge system, formed here by simple resistors 21. Accordingly the signal shown in figure 4h (not in scale with respect to the preceding ones since it is at high voltage, for example 10-15 kV) is obtained at the output on the point 81. This signal, conveniently attenuated by the resistors 82, 83, 84 and the potentiometer 85, is returned on the input of the operational amplifier 72 which is connected to the potentiometers 71, 72, so as to finely adjust the signals supplied at the output. The block 19 furthermore comprises a further Darlington 78 (similar to the preceding ones) controlled at the base by the timing signal supplied by the timer 64 so as to generate on its collector a signal similar to the one present on the point 65 and shown in figure 4g.

The implementation of the elements intended to control the discharge of the anodic current/voltage amplifier 19 by means of simple resistors allows to obtain the discharge with very economical means, however it may require discharge times longer than the currently provided vertical return time. Accordingly it is necessary to prevent the visualization of the image on the screen (that is to say the sending of the video signal towards the final video amplifier) before the voltage present on the output 20 has brought from the highest level to the lowest level at a successive scan of the screen with a different color. For this purpose the previously indicated delay circuit 43 has been provided, having thus the purpose of keeping off the switches 52 and 53 for a time longer than the pure vertical return time. Naturally, if the discharge circuit is implemented through means allowing a more rapid discharge, it will be possible to eliminate the delay and to control the video input switch 11 with the same color signal sent to the parts of the circuit.

As can be seen from the previous description, the invention fully achieves the intended aims. In fact, by virtue of the use of a cathode-ray tube provided with only one gun, the cost related to the monitor is considerably reduced with respect to the polychromatic monitors currently in use, these costs being further reduced by the fact that the monitor according to the invention does not require a perforated mask inside the cathode-ray tube.

Furthermore the monitor according to the invention provides a better performance as to definition both with respect to monochromatic monitors which can only use different shades of gray and with respect to color monitors in which definition is limited to the number of holes provided within the perforated mask, which limits the number of obtainable pixels.

The use of a single-gun cathode-ray tube with screen of a material adapted to emit light at different wavelengths according to the excitation energy and the fact of controlling the sequential scan related to the required base colors (instead of using a simultaneous scan by means of three guns as in know polychromatic monitors) provides a better choice of the dimensions of the tube and therefore the possibility of manufacturing monitors in a greater range of dimensions, by virtue of the fact that currently on the market there is a greater range of bulbs for single-gun cathode-ray tubes with respect to bulbs for three-gun tubes.

Furthermore, the use of resistors to obtain the discharge of the extra anodic voltage allows a further reduction in manufacturing costs, therefore allowing to obtain a polychromatic monitor with very limited costs.

The invention thus conceived is susceptible to numerous modifications and variations, all within the scope of the inventive concept. In particular, though in the embodiment shown reference has been made to the visualization of only two base colors (plus, possibly, the color resulting from their combination), the invention is applicable to any number of base colors, providing in this case the selector as a counter followed by a decoder-demultiplier circuit having a number of outputs equal to the number of desired base colors, each of said outputs being enabled only when the emission of the associated base color is caused. In this case, therefore, in the circuits controlled by the selector it will be necessary to provide a plurality of switch means, each connected to a single output of the selector and adapted to connect the rest of the circuit to adapted components (for example resistors and/or potentiometers) according to the output signals required for the visualization of the base color identified by the selector.

Furthermore, all the details may be replaced with other technically equivalent ones.

## Claims

1. A polychromatic monitor for connection to electric apparata, in particular of numeric type, for visualizing color images and/or texts supplied in input in form of electric signals, comprising a cathode-ray tube (30) for generating a single electron beam at different energy levels and a screen (34) having at least one layer of electroluminescent material to be excited in a differentiated manner by said electron beam for emitting polychromatic light comprising at least two base colors, characterized in that it furthermore comprises a control circuit (Fig. 1) for said cathode-ray tube receiving in input said electric signals and controlling said cathode-ray tube so as to cause generation of said electron beam sequentially at said different energy levels and the emission in sequence of said base colors.

2. A polychromatic monitor according to claim 1, characterized in that said control circuit comprises means (19) for varying the energy level of said electron beam after a complete scan of said screen by said electron beam.

3. A polychromatic monitor according to one or more of the preceding claims, characterized in that it comprises a color selection section (1) receiving in input the vertical synchronization signal and supplying in output a color signal indicative of a base color to be emitted and varying at each synchronization impulse so as to be sequentially correlated to all base colors, an anodic current/voltage amplifier (19), receiving in input said color signal generating the required excitation anodic energy related to the base color corresponding to the received color signal, vertical and horizontal deflection circuits (8,15) receiving in input said color signal and selectively a synchronization signal, respectively vertical and horizontal, and supplying in output vertical and respectively horizontal deflection signals correlated in amplitude to the base color related to the received color signal.

4. A polychromatic monitor according to claim 3, characterized in that said selection section (1) comprises a counter (41, 42) receiving in input (2) said vertical synchronization signal and supplying in output a coded signal the coding whereof corresponds to the base color to be emitted in each instant.

5. A polychromatic monitor according to claims 3 and 4, characterized in that said color selection section (1) furthermore comprises a decoder/demultiplier circuit receiving in input said coded signal and having a plurality of outputs defining, together, said color signal, each of said outputs being associated with a base color, said decoder/demultiplier circuit being adapted to enable in each instant the output corresponding to the coding of said coded signal.

6. A polychromatic monitor according to claims 3 and 4, characterized in that in case of two base colors said counter comprises a bistable memory element (41, 42).

7. A polychromatic monitor according to claim 3, characterized in that it comprises a video input switching section (11), receiving in input a control signal correlated to said color signal and a plurality of video signals each correlated to a different base color and supplying in output in each instant the video signal related to the base color indicated by said color signal, said section comprising a plurality of switch means (52,53) each receiving in input a different video signal and being controlled by said control signal to send in output each time a single video signal.

8. A polychromatic monitor according to claim 3, characterized in that said horizontal deflection circuit (15) and said anodic current/voltage amplifier (19) each comprise at least one power supply circuit (55;73) connected to resistive elements (56,58; 71,72) by means of respective switch means (59;70) controlled by said color signal so as to allow connection of said resistive elements and obtainment of output voltages of said power supply correlated in value to the present color signal.

9. A polychromatic monitor according to claim 3, characterized in that said vertical deflection circuit (8) comprises amplifier means including a feed-back branch as well as resistive means for varying the gain connected to said feed-back branch through respective switch means controlled by said color signal so as to allow connection of said resistive means and obtainment of gains of said amplifier means correlated in value to the present color signal.

10. A polychromatic monitor according to one or more of the preceding claims, characterized in that said anodic current/voltage amplifier comprises resistive discharge means and in that said selection comprises a delay stage for generating said control signal having delayed active edges with respect to said color signal.

11. A process for the visualization of color images on a monitor having a cathode-ray tube with a single electron gun, receiving in input a plurality of video signals, each related to a different base color and having a screen for emitting light in different colors depending on the excitation energy generated by said electron gun, characterized by sending programmed sequences of said video signals to said cathode-ray tube, for the successive visualization of images in different base colors.

12. A process according to claim 11, characterized by performing complete scans of the screen in succession with the video signal related to the different base colors.

13. A process according to the preceding claims, characterized by varying the excitation energy generated by said electron gun at each complete scan of the screen so as to adapt it to the base colors to be emitted.

14. A process according to one or more of the preceding claims, characterized in that the vertical return time of said cathode-ray tube is adjusted so as to allow the variation of the excitation energy during said vertical return time.

FIG.4a
FIG.4b
FIG.4c
FIG.4d
FIG.4e
FIG.4f
FIG.4g
FIG.4h

FIG.1

FIG.2

0 276 786

Fig.3

0 276 786